# EUROPÄISCHE PATENTSCHRIFT

(11) **EP 2 987 605 B1**
(45) Veröffentlichungstag und Bekanntmachung des Hinweises auf die Patenterteilung: **25.10.2017**
(21) Anmeldenummer: 14181665.2
(22) Anmeldetag: 20.08.2014
(51) Int. Cl.: B29C 49/42, B65G 47/91, B65G 47/84

(54) **Transportsystem und Verfahren zum Transport von Kunststoffbehältern**
Transport system and method for the transport of plastic containers
Système de transport et procédé de transport de récipients en plastique

(43) Veröffentlichungstag der Anmeldung: 24.02.2016
(73) Patentinhaber: Krones AG, 93073 Neutraubling (DE)
(72) Erfinder: Albrecht, Thomas, 93073 Neutraubling (DE)
(74) Vertreter: Grünecker Patent- und Rechtsanwälte PartG mbB

(56) Entgegenhaltungen:
- EP-A2- 1 752 264
- DE-A1- 2 706 765
- DE-A1- 2 719 614
- DE-A1- 3 500 342
- DE-U1- 29 713 002
- DE-U1-202014 001 768
- JP-A- H04 223 133

## Beschreibung

Die Erfindung betrifft ein Transportsystem und Verfahren zum Transport von Kunststoffbehältern mit den Merkmalen der Oberbegriffe von Anspruch 1 bzw. 9.

Bekanntermaßen lassen sich Kunststoffbehälter im Streckblasverfahren aus Vorformlingen herstellen.

Alternativ zu einem Aufblasen der Behälter mit Pressluft beschreibt die EP 1529620 B1 ein Verfahren zum hydraulischen Umformen von Vorformlingen zu Kunststoffflaschen. Zu diesem Zweck werden die Vorformlinge zuerst erwärmt, in eine Hohlform verbracht und dort in Längsrichtung gereckt. Es wird ferner Mineralwasser oder dergleichen unter Überdruck eingeleitet, um die endgültige Behälterform herzustellen. Das Mineralwasser verbleibt im Behälter, sodass ein nachfolgender separater Abfüllschritt entbehrlich ist.

Die US 2011/0031659 A1 beschreibt ferner ein Verfahren, bei dem ein erwärmter Vorformling mittels einer Reckstange gereckt und anschließend mittels eines inkompressiblen Fluids, insbesondere Wasser, hydraulisch zu einem Behälter geweitet wird. Danach wird das Fluid durch Pressluft verdrängt und läuft aus dem Behälter ab.

Ferner sind zur Übergabe zwischen zwei oder zum Transport innerhalb einer Behälterbehandlungsmaschinen Transportsysteme, wie beispielsweise Transportsterne, Förderbänder, Karusselle oder dergleichen bekannt. Dabei werden die Behälter üblicherweise am Behälterhals und/oder Behälterboden mit entsprechenden Behälteraufnahmen gehalten.

Nachteilig dabei ist, dass die Kunststoffbehälter beim Ausformen und Abfüllen in einer Behandlungsmaschine gelegentlich nicht weit genug abgekühlt sind und dann durch die Aufnahmen des Transportsystems plastisch verformt werden können. Dadurch leidet beim Transport die Qualität der Kunststoffbehälter.

Die DE 20 2014 001768 U1 offenbart eine Vorrichtung zum Wenden von formstabilen Behältern mit einem Schwenkarm und einer Behälterhalterung, die wenigstens einen Saugnapf aufweist.

Die JP H04 223133 A offenbart eine Vorrichtung zum Gießen eines Granulats, bei der Saugnäpfe vorgesehen sind, um das Formteil aus der Form zu entfernen.

Die DE 27 06 765 A1 offenbart eine Vorrichtung zum Sortieren von verschiedenartigen und/oder fehlerhaften Gefäßen mit Flaschenaufnahmetaschen, denen an ein Vakuumsystem angeschlossene Saugnäpfe zugeordnet sind.

Aufgabe der vorliegenden Erfindung ist es daher, ein Transportsystem für eine Behälterbehandlungsmaschine bereitzustellen, das die Qualität der Kunststoffbehälter möglichst wenig beeinträchtigt.

Zur Lösung der Aufgabenstellung stellt die Erfindung ein Transportsystem mit den Merkmalen des Anspruchs 1 bereit.

Vorteilhafte Ausführungsformen der Erfindung sind in den Unteransprüchen definiert.

Dadurch, dass der Saugnapf an die Behälterform angepasst ist, wird der Kunststoffbehälter großflächig angegriffen bzw. gehalten. Folglich ist die Haltekraft an der Kontaktfläche zum Kunststoffbehälter besonders gleichmäßig verteilt und es entstehen keine Spannungsspitzen. Darüber hinaus wird ein erwärmter und noch verformbarer Kunststoffbehälter durch die angepasste Form des Saugnapfs in der gewünschten Behälterform stabilisiert. Dadurch können mit dem Transportsystem auch forminstabile Behälter im Verarbeitungsprozess ohne Qualitätsminderung zuverlässig transportiert werden.

Das Transportsystem und/oder die Behälterbehandlungsanlage können in einer Getränkeverarbeitungsanlage angeordnet sein. Die Behälterbehandlungsanlage kann eine Behälterherstellungsmaschine zum Umformen von Vorformlingen in die Kunststoffbehälter umfassen. Das Transportsystem kann einer Behälterbehandlungsmaschine, einer Behälterherstellungsmaschine, einer Formfüllmaschine, einer Streckblasmaschine, einem Rinser, einem Füller, einem Verschließer und/oder einer Verpackungsmaschine vor- oder nachgeordnet sein. Die Formfüllmaschine kann wenigstens eine Behandlungsstation zum expandierenden Umformen des Vorformlings zum Kunststoffbehälter in der Hohlform und zum Abfüllen des Produkts in den Kunststoffbehälter in der Hohlform umfassen

Die Kunststoffbehälter können dafür vorgesehen sein, Getränke, Hygieneartikel, Pasten, chemische, biologische und/oder pharmazeutische Produkte aufzunehmen. Die Kunststoffbehälter können Kunststoffflaschen, Dosen und/oder Tuben sein. Bei den Kunststoffbehältern kann es sich im Speziellen um PET-, HD-PE- oder PP-Behälter bzw. -Flaschen handeln.

Das Transportsystem kann als Transportstern, Karussell oder Förderband ausgebildet sein. Der Transportstern und/oder das Karussell können um eine vertikale Achse mittels eines Antriebs drehbar ausgebildet sein. "Vertikal" kann hier bedeuten, dass dies die Richtung ist, die auf den Erdmittelpunkt gerichtet ist. Die Behälteraufnahme kann über einen Transportarm mit dem Antrieb verbunden sein. Insbesondere kann eine vertikale zentrale Welle / Schaft / Säule mit dem Antrieb drehbar sein und daran mehrere im Wesentlichen horizontale Transportarme sternförmig angeordnet sein. Die Behälteraufnahme kann zur Aufnahme eines Kunststoffbehälters am Hals, am Behälterkörper und/oder Behälterboden vorgesehen sein. Denkbar ist, dass die Behälteraufnahme zusätzlich Puffer, Greifer, Stützen und dergleichen umfasst.

Der Saugnapf kann aus einem gummiartigen Material ausgebildet sein, um sich an die Behälterform besonders gut anzuschmiegen. Dadurch wird die Saugwirkung verbessert. Der Saugnapf kann wenigstens eine Kontaktzone mit einem als Dichtelement ausgebildeten Rand aufweisen. Der Rand kann lippenartig ausgebildet sein. Zur Zuleitung eines Unter-, Ausgleichs- oder Überdrucks kann der Saugnapf Kanäle aufweisen, die insbesondere einen Druckanschluss mit der Kontaktzone verbinden. Zur Stabilisierung seiner Form kann der Saugnapf Rippen- und/oder Wabenelemente aufweisen. Denkbar ist auch, dass der Saugnapf aus wenigstens zwei verschieden steifen Kunststoffsorten oder aus einem gummiartigen Kunststoffeinsatz in einem Trägerelement besteht. Dadurch ergibt sich eine hohe Formstabilität bei geleichzeitig guter Dichtwirkung.

Dass der Saugnapf an die Behälterform angepasst ist, kann hier bedeuten, dass eine Kontaktfläche des Saugnapfs zu wenigstens einem Teilbereich der Behälterform korrespondierend ausgebildet ist. Beispielsweise kann der Saugnapf mit seiner Kontaktfläche im Wesentlichen eine Negativform zum korrespondierenden Teilbereich des Behälters sein.

Der Saugnapf ist zur Anpassung an die Behälterform mit einem 3D-Druckverfahren hergestellt. Dadurch kann der Saugnapf besonders schnell und kostengünstig an einen bestimmten Behältertyp angepasst werden. Das 3D-Druckverfahren kann beispielsweise ein Lasersinter-, Stereolithographie- oder 3D-Direktdruckverfahren sein. Denkbar sind jedoch auch beliebige andere 3D-Druckverfahren, die den Saugnapf punkt-, zeilen- oder schichtweise aus einem gummiartigen Material herstellen können. Ferner kann mit dem 3D-Druckverfahren eine Gieß- oder Urform (ohne Zerspanung) herstellbar sein, über die der Saugnapf mittels einer Abformung herstellbar ist. Weiterhin kann die 3D-Geometrie eines bestimmten Behältertyps aus einem CAD-System, einem 3D-Scanner und/oder einer Sortenverwaltung als Basis für die Herstellung des Saugnapfs mit dem 3D-Druckverfahren dienen. Denkbar ist hier, dass mit einer automatischen Software Geometrieteile des Behältertyps automatisch zur Geometrie des Saugnapfs verarbeitet werden.

Eine Unterdruckeinheit kann zur Bereitstellung eines Unterdrucks im Saugnapf vorgesehen sein und insbesondere an der Behälteraufnahme angeordnet sein. Dadurch kann die Saugwirkung des Saugnapfs an- und abgestellt werden. Dabei kann jeder Behälteraufnahme eine Unterdruckeinheit zugeordnet sein. Denkbar ist, dass die Saugnäpfe des Transportsystems jeweils beim Erreichen einer Aufnahmeposition mit einem Unterdruck versorgbar sind, um den Behälter aufzunehmen und jeweils bei einer Abgabeposition mit einem Ausgleichs- oder Überdruck versorgbar sind, um den aufgenommenen Behälter wieder abzugeben.

Die Unterdruckeinheit kann als Faltenbalg, Kolben- oder Membransystem ausgebildet sein. Dadurch ist die Unterdruckeinheit besonders einfach und damit kostengünstig aufgebaut. Darüber hinaus kann die Unterdruckeinheit zur Unterstützung mit einer Vakuumpumpe verbunden sein. Vorzugsweise können mehrere oder alle Unterdruckeinheiten des Transportsystems mit einer Vakuumpumpe beispielsweise über einen Drehverteiler verbunden sein.

Eine Steuerkurve, ein Motor und/oder eine Feder können zur Betätigung der Unterdruckeinheit ausgebildet sein. Dadurch kann die Unterdruckeinheit automatisch an der gewünschten Aufnahme- bzw. Abgabeposition betätigt werden. Beispielsweise kann die Steuerkurve dazu ausgebildet sein, an einer gewünschten Position einen Druck auf die Unterdruckeinheit auszuüben, um diese zu komprimieren. Dadurch wird der Unterdruck im Saugnapf an dieser Position aufgehoben. Durch eine entgegengesetzt wirkende Feder wird dagegen die Unterdruckeinheit expandiert und baut den gewünschten Unterdruck auf. Alternativ oder zusätzlich ist denkbar, dass die Steuerkurve eine Zugkraft auf die Unterdruckeinheit ausübt. Ferner kann ein Motor anstatt der Steuerkurve dazu vorgesehen sein, bei der gewünschten Position die Unterdruckeinheit zu betätigen.

Vorzugsweise kann die Unterdruckeinheit mit dem Saugnapf über einen Druckkanal verbunden sein. Dadurch ist die Behälteraufnahme besonders einfach aufgebaut. Beispielsweise kann das Transportsystem mehrere Behälteraufnahmen umfassen, die jeweils einen Saugnapf und eine über einen Druckkanal verbundene Unterdruckeinheit aufweist. Durch die oben näher beschriebenen Betätigungsmechanismen können die Unterdruckeinheiten dann an den gewünschten Positionen gesteuert werden.

Das Transportsystem kann wenigstens eine Plattform zur Unterstützung des Behälterbodens umfassen, wobei die Plattform insbesondere mit der Behälteraufnahme mitlaufend ausgebildet ist. Dadurch können auch besonders schwere Behälter sicher transportiert werden. Denkbar ist, dass jeder Behälteraufnahme eine Plattform zugeordnet ist. Dabei kann der Saugnapf den Behälter seitlich angreifen bzw. halten.

Der Saugnapf kann über ein schaltbares Steuerventil mit einer Vakuumpumpe verbunden sein. Denkbar ist hier, dass das Steuerventil elektronisch schaltbar ist und das Transportsystem so besonders flexibel konfiguriert werden kann. Vorzugsweise sind mehrere oder alle Saugnäpfe des Transportsystems mit der Vakuumpumpe, beispielsweise über einen Drehverteiler, verbunden.

Darüber hinaus stellt die Erfindung mit dem Anspruch 9 ein Verfahren zum Transport von Kunststoffbehältern in einer Behälterbehandlungsanlage bereit, dadurch gekennzeichnet, dass die Kunststoffbehälter mit einem an die Behälterform angepassten Saugnapf transportiert werden.

Durch den angepassten Saugnapf wird die Krafteinwirkung auf den Kunststoffbehälter besonders großflächig ohne Spannungsspitzen verteilt. Ferner wird die Behälterform durch den angepassten Saugnapf stabilisiert. Dadurch können erwärmte Behälter, die besonders leicht deformierbar sind, ohne Qualitätseinbußen sicher transportiert werden.

Zum Aufnehmen oder Abgeben der Kunststoffbehälter kann eine Unterdruckeinheit mit einer Steuerkurve betätigt werden, wodurch im Saugnapf ein Unter-, Ausgleichs- oder Überdruck erzeugt wird. Dadurch ist es besonders einfach, das Aufnehmen und Abgeben der Kunststoffbehälter zu steuern.

Darüber hinaus kann das Verfahren die zuvor in Bezug auf die Ansprüche 1 - 8 beschriebenen Merkmale einzeln oder in beliebigen Kombinationen umfassen.

Weitere Merkmale und Vorteile der Erfindung werden nachfolgend anhand der in den Figuren dargestellten Ausführungsbeispiele näher erläutert. Dabei zeigt:
- Figur 1: ein Ausführungsbeispiel eines Transportsystems in einer Formfüllmaschine in einer Draufsicht;
- Figuren 2A - 2B: eine Behälteraufnahme des in der Figur 1 dargestellten Transportsystems in einer seitlichen Ansicht; und
- Figuren 3A - 3B: ein zu den Figuren 2A - 2B alternatives Ausführungsbeispiel einer Behälteraufnahme in einer seitlichen Ansicht.

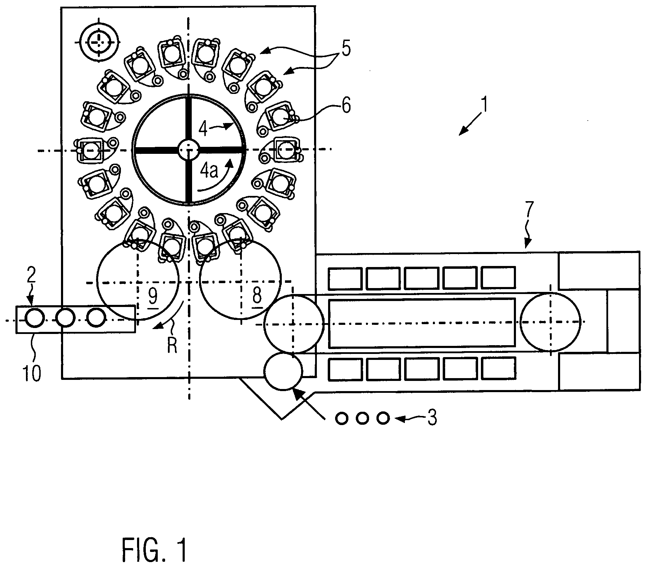

In der Figur 1 ist ein Ausführungsbeispiel eines Transportsystems 9 in einer Formfüllmaschine 1 in einer Draufsicht dargestellt. Zu sehen sind die Vorformlinge 3, die zunächst den Ofen 7 durchlaufen und dadurch soweit erwärmt werden, dass sie mit der nachfolgenden Formfüllmaschine 1 in die gewünschte Behälterform umgeformt werden können. Anschließend werden die erwärmten Vorformlinge mit dem Einlaufstern 8 an die Behandlungsstationen 5 übergeben. Beim Umlauf des Karussells 4 entlang der Richtung 4a werden die Vorformlinge 3 in den Behandlungsstationen 5 gestreckt, in die gewünschte Behälterform umgeformt und mit dem Produkt befüllt. Dabei verbleiben die Vorformlinge 3 bzw. die ausgeformten Behälter 2 immer in den Hohlformen 6. Nach dem Befüllen werden die Behälter 2 über das als Auslaufstern ausgebildete Transportsystem 9 dem Transportband 10 für weitere Behandlungsschritte zugeführt. Beispielsweise kann der Formfüllmaschine 1 ein Verschließer nach- oder zugeordnet sein, mit dem die Behälter 2 verschlossen werden. Die Behälter 2 sind hier Kunststoffbehälter aus PET, können jedoch aus jedem anderen geeigneten Kunststoff sein.

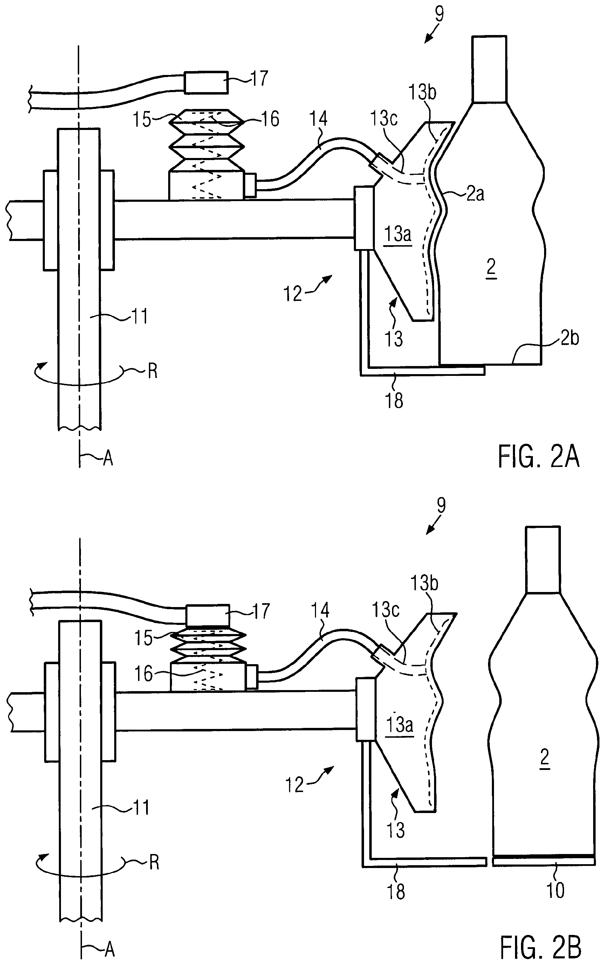

Da das Umformen und Füllen der Behälter 2 in der Formfüllmaschine sehr schnell erfolgt, können diese im Bereich des Transportsystems 9 noch erwärmt und damit leicht verformbar sein. Um eine Beschädigung zu vermeiden, ist das Transportsystem 9 mit Behälteraufnahmen 12 versehen, die einen an die Behälterform angepassten Saugnapf zum Angriff und Halten des Behälters 2 aufweisen. Dies wird nachfolgend genauer anhand der Figuren 2A - 3B beschrieben:
In den Figuren 2A - 2B ist eine Behälteraufnahme 12 des in der Figur 1 dargestellten Transportsystems 9 in einer seitlichen Ansicht dargestellt. Zu sehen ist, dass sich die Säule 11 mittels eines hier nicht dargestellten Antriebs um die vertikale Drehachse A in Förderrichtung R dreht. Am oberen Ende der Säule 11 sind mehrere gleich aufgebaute Behälteraufnahmen 12 angeordnet. Der Übersichtlichkeit halber ist in den Figuren 2A - 3B jeweils nur eine einzelne Behälteraufnahme 12 gezeigt.

Die Behälteraufnahme 12 weist einen Transportarm auf, der an einem Ende mit der Welle 11 und am anderen Ende mit dem Saugnapf 13 verbunden ist. Folglich bewegt sich der Saugnapf 13 entlang einer kreisförmigen Transportbahn um die Drehachse A.

Der Saugnapf 13 ist mit der zum Behälterteilbereich 2a korrespondierenden Kontaktfläche 13b an die Behälterform angepasst. Dort verläuft die Kontaktfläche 13b sowohl in der hier dargestellten Behälterlängsrichtung als auch in der nicht dargestellten Behälterumfangsrichtung entlang der Außenwand des Kunststoffbehälters 2. Anders ausgedrückt bildet die Kontaktfläche 13b eine Negativform zum korrespondierenden Behälterteilbereich 2a. Dadurch liegt die Kontaktfläche 13b beim Halten vollflächig am Behälter 2 an.

Darüber hinaus weist der Saugnapf 13 in seinem Körper 13a einen oder mehrere Kanäle 13c auf und ist über den Schlauch 14 (Druckkanal) mit der Unterdruckeinheit 15 verbunden. Mit der Unterdruckeinheit 15 wird die Kontaktfläche 13b mit Unterdruck zum Halten oder mit einem leichten Überdruck zum Abgeben des Behälters 2 versorgt. Diese ist hier als Faltenbalg mit einer innen angeordneten Feder 16 ausgebildet. Die Steuerkurve 17 ist im Zusammenwirken mit der entgegengesetzt wirkenden Feder 16 dazu vorgesehen, den Faltenbalg 15 an einer Aufnahmeposition zu expandieren und dann an einer Abgabeposition des Behälters 2 zu komprimieren. Dadurch wird der entsprechende Druck für den Saugnapf 13 bereitgestellt.

Das Transportsystem 9 aus den Figuren 1, 2A und 2B wird wie folgt eingesetzt:
In der Figur 2A ist der Behälter 2 in einer Aufnahmeposition gezeigt, bei der die Steuerkurve 17 die Unterdruckeinheit 15 nicht berührt. Dadurch wird der Faltenbalg durch die Feder 16 so weit wie möglich expandiert und es baut sich ein Unterdruck im Saugnapf 13 auf. Dadurch wird der Behälter 2 im Bereich der Kontaktfläche 13b vollflächig angesaugt und gehalten. Zusätzlich wird der Behälter 2 am Boden 2b durch die Plattform 18 unterstützt. Dadurch können auch besonders schwere Behälter 2 sicher gehalten werden.

Wie in der Figur 2B genauer dargestellt, ist die Steuerkurve 17 um die Drehachse A umlaufend ausgebildet und verläuft im Bereich der Abgabeposition tiefer. Dadurch wird die Unterdruckeinheit 15 zusammengedrückt und es bildet sich ein leichter Überdruck in der Leitung 14, dem Kanal 13c und der Kontaktfläche 13b aus. Dadurch wird der Behälter 2 besonders schonend vom Saugnapf 13 abgelöst und kann beispielsweise an das hier dargestellte Förderband 10 übergeben werden.

Der Saugnapf 13 ist mit einem 3D-Druckverfahren aus einem gummiartigen Material hergestellt. Dazu wird zunächst die Außengeometrie des Behälters 2 aus einem CAD-System oder mit einem 3D-Scanner bestimmt. Der für den Kontakt mit dem Saugnapf 13 gewünschte Behälterteilbereich 2a wird aus der Außengeometrie isoliert und mit einem Grundmodell des Saugnapfs verschnitten. Zusätzlich wird die Kontaktfläche 13b mit der umschließenden Gummilippe modelliert. Das fertige 3D-Modell des Saugnapfs wird anschließend einem 3D-Drucker, beispielsweise eine Lasersinteranlage, zugeführt. Denkbar ist auch, dass mit dem 3D-Drucker zunächst eine Urform oder eine Gießform hergestellt wird, in der dann die eigentlichen Saugnäpfe 13 abgegossen werden. Dadurch kann einfach und kostengünstig für jede der Behälteraufnahmen 12 ein an die Behälterform angepasster Saugnapf hergestellt werden, ohne dass dafür mit hohem Aufwand für jeden Behältertyp eine Gießform mit zerspanenden Verfahren hergestellt werden muss.

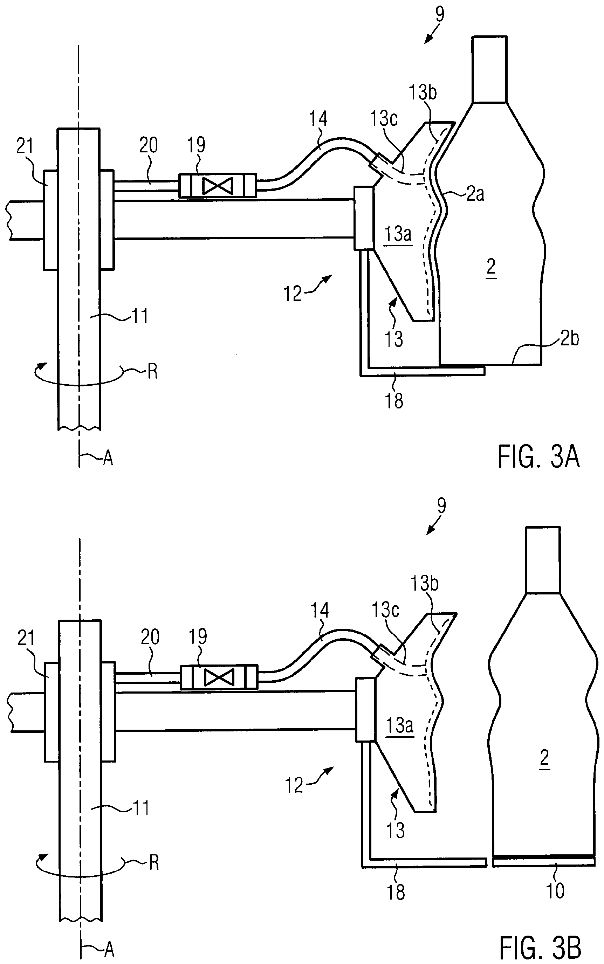

In den Figuren 3A - 3B ist eine zu den Figuren 2A - 2B alternative Ausführungsform der Behälteraufnahme 12 in einer seitlichen Ansicht dargestellt. Diese unterscheidet sich von den Figuren 2A - 2B lediglich dadurch, dass der Saugnapf 13 über die Leitung 14 anstatt zur Unterdruckeinheit über das schaltbare Steuerventil 19 mit einer hier nicht dargestellten, zentralen Vakuumpumpe verbunden ist. Im Detail wird der Unterdruck der Vakuumpumpe über den Drehverteiler 21 und über das zwischen den Leitungen 20 und 14 angeordnete, schaltbare Steuerventil 19 geführt.

Das Transportsystem 9 in den Figuren 3A - 3B wird wie folgt eingesetzt:
Zum Aufnehmen des Behälters 2 (Figur 3A) wird das Steuerventil 19 elektronisch so geschaltet, dass die Leitung 14 mit der Zuleitung 20 verbunden ist. Dadurch wirkt der Unterdruck der Vakuumpumpe auf den Saugnapf 13 und der Behälter 2 wird angesaugt.

Dagegen wird an der Abgabeposition in Figur 3B das Steuerventil 19 elektronisch so geschaltet, dass die Leitung 14 mit der Umgebung über eine hier nicht dargestellte Öffnung verbunden wird. Dadurch gleicht sich der Druck im Saugnapf 13 mit der Umgebung aus und die Saugwirkung auf den Behälter 2 wird aufgehoben. Dadurch kann der Behälter 2 beispielsweise an das Förderband 10 abgegeben werden.

Durch den angepassten Saugnapf 13 können die Behälter 2 mit den in den Figuren 1 - 3B dargestellten Transportsystemen 9 ohne eine Beeinträchtigung der Qualität aufgenommen, transportiert und wieder abgegeben werden. Besonders vorteilhaft kann die Transporteinrichtung 9 für erwärmte Behälter 2 eingesetzt werden, da diese durch den angepassten Saugnapf 13 formstabilisiert werden.

Es versteht sich, dass in den zuvor beschriebenen Ausführungsbeispielen genannte Merkmale nicht auf diese speziellen Kombinationen beschränkt und in beliebigen anderen Kombinationen möglich sind.

## Patentansprüche

1. Transportsystem (9) zum Transport von Kunststoffbehältern (2) in einer Behälterbehandlungsanlage (1), mit wenigstens einer zum Transport eines Kunststoffbehälters (2) in Förderrichtung verfahrbaren Behälteraufnahme (12),
wobei die Behälteraufnahme (12) wenigstens einen an die Behälterform angepassten Saugnapf (13) zum Angriff und Halten des Kunststoffbehälters (2) aufweist,
**dadurch gekennzeichnet, dass**
der Saugnapf (13) zur Anpassung an die Behälterform mit einem 3D-Druckverfahren hergestellt ist.

2. Transportsystem (9) nach Anspruch 1, wobei eine Kontaktfläche (13b) des Saugnapfs (13) zu wenigstens einem Teilbereich (2a) der Behälterform korrespondierend ausgebildet ist.

3. Transportsystem (9) nach Anspruch 1 oder 2, wobei eine Unterdruckeinheit (15) zur Bereitstellung eines Unterdrucks im Saugnapf (13) vorgesehen und insbesondere an der Behälteraufnahme (12) angeordnet ist.

4. Transportsystem (9) nach Anspruch 3, wobei die Unterdruckeinheit (15) als Faltenbalg, Kolben- oder Membransystem ausgebildet ist.

5. Transportsystem (9) nach Anspruch 3 oder 4, wobei eine Steuerkurve (17), ein Motor und/oder eine Feder (16) zur Betätigung der Unterdruckeinheit (15) ausgebildet ist.

6. Transportsystem nach einem der Ansprüche 3 - 5, wobei die Unterdruckeinheit (15) mit dem Saugnapf (13) über einen Druckkanal (14) verbunden ist.

7. Transportsystem (9) nach einem der vorangegangenen Ansprüche, wobei das Transportsystem (9) wenigstens eine Plattform (18) zur Unterstützung des Behälterbodens (2b) umfasst, wobei die Plattform (18) insbesondere mit der Behälteraufnahme (12) mitlaufend ausgebildet ist.

8. Transportsystem (9) nach einem der vorangegangenen Ansprüche, wobei der Saugnapf (13) über ein schaltbares Steuerventil (19) mit einer Vakuumpumpe verbunden ist.

9. Verfahren zum Transport von Kunststoffbehältern (2) in einer Behälterbehandlungsanlage (1),
wobei die Kunststoffbehälter (2) mit einem an die Behälterform angepassten Saugnapf (13) transportiert werden,
**dadurch gekennzeichnet, dass**
der Saugnapf (13) zur Anpassung an die Behälterform mit einem 3D-Druckverfahren hergestellt wird.

10. Verfahren nach Anspruch 9, wobei zum Aufnehmen oder Abgeben der Kunststoffbehälter (2) eine Unterdruckeinheit (15) mit einer Steuerkurve betätigt (17) wird und im Saugnapf (13) dadurch ein Unter-, Ausgleichs- oder Überdruck erzeugt wird.

## Claims

1. Transport system (9) for transporting plastic containers (2) in a container treatment system (1), comprising at least one container receptacle (12) which is movable in conveying direction for transporting a plastic container (2),
wherein the container receptacle (12) comprises at least one suction cup (13) adapted to the container shape for gripping and holding the plastic container (2),
**characterized in that**
the suction cup (13) is produced with a 3D printing process for adaptation to the container shape.

2. Transport system (9) according to claim 1, wherein a contact surface (13b) of the suction cup (13) is configured to correspond to at least a section (2a) of the container shape.

3. Transport system (9) according to claim 1 or 2, wherein a vacuum unit (15) is provided for producing a vacuum in the suction cup (13) and is arranged in particular on the container receptacle (12).

4. Transport system (9) according to claim 3, wherein the vacuum unit (15) is configured as bellows, piston or membrane system.

5. Transport system (9) according to claim 3 or 4, wherein a control cam (17), a motor and/or a spring (16) is configured to operate the vacuum unit (15).

6. Transport system according to any one of claims 3 to 5, wherein the vacuum unit (15) is connected to the suction cup (13) via a pressure channel (14).

7. Transport system (9) according to any one of the preceding claims, wherein the transport system (8) comprises at least one platform (18) for supporting the container bottom (2b), wherein the platform (18) is configured to run along particularly with the container receptacle (12).

8. Transport system (9) according to any one of the preceding claims, wherein the suction cup (13) is connected via a switchable control valve (19) to a vacuum pump.

9. Method for transporting plastic containers (2) in a container treatment system (1),
wherein the plastic containers (2) are transported with a suction cup (13) adapted to the container shape,
**characterized in that**
the suction cup (13) is produced with a 3D printing process for adaptation to the container shape.

10. Method according to claim 9, wherein a vacuum unit (15) is operated with a control cam (17) to receive or discharge the plastic containers (2), and a negative pressure, compensating pressure or overpressure is thereby produced in the suction cup (13).

## Revendications

1. Système de transport (9) pour le transport de contenants (2) en matière plastique dans une installation de traitement de contenants (1), comprenant au moins un dispositif d'accueil de contenant (12), qui peut être déplacé dans la direction de transport pour assurer le transport d'un contenant (2) en matière plastique, système
dans lequel dispositif d'accueil de contenant (12) comporte au moins une ventouse (13) adaptée à la forme du contenant et destinée à s'appliquer sur le contenant (2) en matière plastique et à maintenir celui-ci, **caractérisé**
**en ce que** la ventouse (3), pour son adaptation à la forme du contenant, est fabriquée par un procédé d'impression 3D (en trois dimensions).

2. Système de transport (9) selon la revendication 1, dans lequel une surface de contact (13b) de la ventouse (13) est réalisée de manière à correspondre au moins à une zone partielle (2a) de la forme du contenant.

3. Système de transport (9) selon la revendication 1 ou la revendication 2, dans lequel il est prévu une unité à dépression (15) pour produire une dépression dans la ventouse (13), cette unité à dépression étant notamment agencée sur le dispositif d'accueil de contenant (12).

4. Système de transport (9) selon la revendication 3, dans lequel l'unité à dépression (15) est réalisée sous forme de soufflet ou de système à piston ou à membrane.

5. Système de transport (9) selon la revendication 3 ou la revendication 4, dans lequel il est prévu une came de commande (17), un moteur et/ou un ressort (16) pour actionner l'unité à dépression (15).

6. Système de transport selon l'une des revendications 3 à 5, dans lequel l'unité à dépression (15) est reliée à la ventouse (13) par l'intermédiaire d'un canal de pression (14).

7. Système de transport (9) selon l'une des revendications précédentes, dans lequel le système de transport (9) comporte au moins une plateforme (18) pour soutenir le fond de contenant (2b), la plateforme (18) étant notamment réalisée de manière à accompagner le dispositif d'accueil de contenant (12) dans son déplacement.

8. Système de transport (9) selon l'une des revendications précédentes, dans lequel la ventouse (13) est reliée à une pompe à vide via une vanne de commande (19) pouvant être commutée.

9. Procédé de transport de contenants (2) en matière plastique dans une installation de traitement de contenants (1),
d'après lequel les contenants (2) en matière plastique sont transportés à l'aide d'une ventouse (13) adaptée à la forme du contenant,
**caractérisé**
**en ce que** la ventouse (3) pour son adaptation à la forme du contenant, est fabriquée par un procédé d'impression 3D (en trois dimensions).

10. Procédé selon la revendication 9, d'après lequel pour accueillir ou délivrer les contenants (2) en matière plastique, une unité à dépression (15) est actionnée à l'aide d'une came de commande (17), en produisant ainsi dans la ventouse (13), une dépression, une pression de compensation ou une surpression.
